# EUROPEAN PATENT SPECIFICATION

(11) **EP 1 346 165 B1**
(45) Date of publication and mention of the grant of the patent: **02.08.2006**
(21) Application number: 01271506.6
(22) Date of filing: 18.12.2001
(51) Int. Cl.: F16D 55/40, F16D 65/095

(54) **SUPPORT AND GUIDING STRUCTURE FOR FRICTION ELEMENT IN DISC BRAKES**
STÜTZ- UND FÜHRUNGSANORDNUNG FÜR REIBELEMENTE IN SCHEIBENBREMSEN
STRUCTURE DE SOUTIEN ET DE GUIDAGE POUR ELEMENT DE FROTTEMENT SUR FREIN A DISQUE

(30) Priority: 18.12.2000 GB 0030785
(43) Date of publication of application: 24.09.2003
(73) Proprietor: Delphi Technologies Inc., Troy, MI 48007 (US)
(72) Inventor: GOODREID, Charles Stuart, Coventry, West Midlands CV3 5LV (GB)
(74) Representative: Lamb, Richard Andrew
(86) International application number: PCT/GB2001/005598
(87) International publication number: WO 2002/050447

(56) References cited:
- EP-A- 1 158 196
- DE-A- 2 620 114
- DE-A- 3 910 969
- GB-A- 2 076 486
- US-A- 3 124 217

## Description

This invention relates to friction element control in disc brakes. An example of the application of the invention is to the control of friction elements in spot-type automotive disc brakes, particularly such brakes of the kind in which a fixed caliper and sliding friction elements are employed.

The invention may find an application outside the strict limits of the technical field of the disc brakes disclosed in the specific embodiments described below, but principally the invention is concerned with controlling the movement of friction elements in relation to the associated structures of a disc brake, particularly the disc or discs themselves (which rotate during use), and the relatively fixed or non-rotatable structures such as that of the caliper on which the friction elements are mounted.

Generally, the friction elements with which the invention is concerned are those which are not actually fixed to a position-defined structure such as the end plate of a fixed caliper and thus, the invention is particularly applicable to friction elements of the kind employed as the middle one of three friction elements interleaved with twin discs in a fixed caliper/sliding disc assembly as disclosed below.

In such a disc brake, a need arises for excellent dynamic control of the movement/position/attitude of the friction elements during brake application in order to maximise the effectiveness of the brake and minimise the extent of uneven wear during use.

In this connection, we have already disclosed in co-pending applications arrangements whereby the friction elements are provided with anti-tilt systems to maintain as far as possible the parallel and co-planar relationship of the friction-producing faces of the friction elements and of the brake discs themselves, and this has largely been achieved by means of spring arrangements exerting substantial resilient forces on the sliding disc assemblies and likewise on the sliding friction elements assemblies to achieve the necessary degree of control under the dynamic conditions of use.

Developments thus far have enabled us to provide a satisfactory degree of control in respect of those functions which may be conveniently grouped under the heading "anti-tilt control", but we have discovered that there is a further area in relation to friction element control which requires attention in order to provide further advances in relation to the dynamic aspects of the performance of the disc brake itself.

These further factors which require attention concern principally the question of the response of the friction elements to the effect of the torque exerted thereon by the frictional forces during brake application.

Thus, it will be readily understood that upon brake application and frictional engagement of the friction pads with the rotating disc, the applied forces acting on the friction elements produce a torque due to the rotary motion of the brake discs and such torque or turning effect on the pad and thus on its backing plate and thus on the friction element as a whole can cause destabilisation of the friction elements leading to a reduction in brake efficiency, or possibly uneven wear of the friction pads, and an object of the present invention is to provide improvements in this regard in relation to friction elements for disc brakes, or indeed improvements generally.

A brake assembly including a brake shoe hold down clip to prevent radial movement of the brake shoes is disclosed in US 5538105.

Prior published UK patent applications GB 2088500, GB 2132293, GB1447149, and GB 1381589 all disclose further arrangements for locating and mounting the friction pads in disc brakes.

According to the invention there is provided a spot type automotive disc brake as defined in claim 1. Further advantageous features of the spot type automotive disc brake are defined in subsequent claims 2 to 9.

There is also provided a brake friction element as defined in claim 10. Further advantageous features of the brake friction element are spot type automotive disc brake are defined in subsequent claims 11 to 17.

In embodiments of the invention described below the axially slidable friction elements are provided with the basic guide means and supporting means whereby they are able to execute supported axial movement for frictional engagement with the brake discs. However, in addition, the slidable friction elements are provided with abutment or torque-transmitting means in the form of an abutment or torque-transmitting element and an associated abutment or torque-transmitting channel in which the abutment or torque-transmitting element is received. These structures (provided respectively at the upper edge of the friction element and at the underside of the brake caliper) serve to provide an important abutment or torque-transmitting function for the friction elements whereby the potentially twisting effect of the braking torque applied by the rotating brake discs is effectively neutralised by the abutting engagement of the abutment or torque-transmitting element with its corresponding abutment or torque-transmitting channel. Moreover, although it would be possible to provide the abutment or torque-transmitting element as merely an upstanding peg or the like structure having the same thickness as the remainder of the friction element backing plate (and some benefit in terms of torque neutralisation would undoubtably be available), in the embodiments the abutment or torque-transmitting element is constructed so as to have a length dimension (extending lengthwise in the direction of the thickness of the backing plate material) whereby its torque neutralisation effects are significantly enhanced. It also potentially assists in guiding its friction element.

A particular feature of the embodiments is the location of the abutment or torque-transmitting element in relation to the line of action of the actuation means for the brake, such as the centre line of the actuating piston. In the embodiments, the abutment or torque-transmitting element is positioned directly above the line of action of the piston, and this is the preferred position. In the case where twin actuating pistons are provided, then a central position between the pistons (and thus effectively at the centre of pressure produced by the pistons) is preferred.

Embodiments of the invention will now be described by way of example with reference to the accompanying drawings in which:
Fig 1 shows, in block diagram format a spot-type automotive disc brake comprising a pair of axially slidable discs and associated friction elements, an actuating mechanism therefor and a fixed caliper or bridge structure overlying same;
Fig 2 shows on a somewhat larger scale an exploded perspective view of the caliper and an associated friction element with an abutment or torque-transmitting element shown at an upper edge of the friction element together with an associated abutment or torque-transmitting channel to receive same;
Fig 3 shows a side elevation view of the assembly of Fig 2 in its assembled condition; and
Fig 4 shows a plan view, as seen in the direction of arrow IV in Fig 3, of the assembly of Figs 2 and 3.

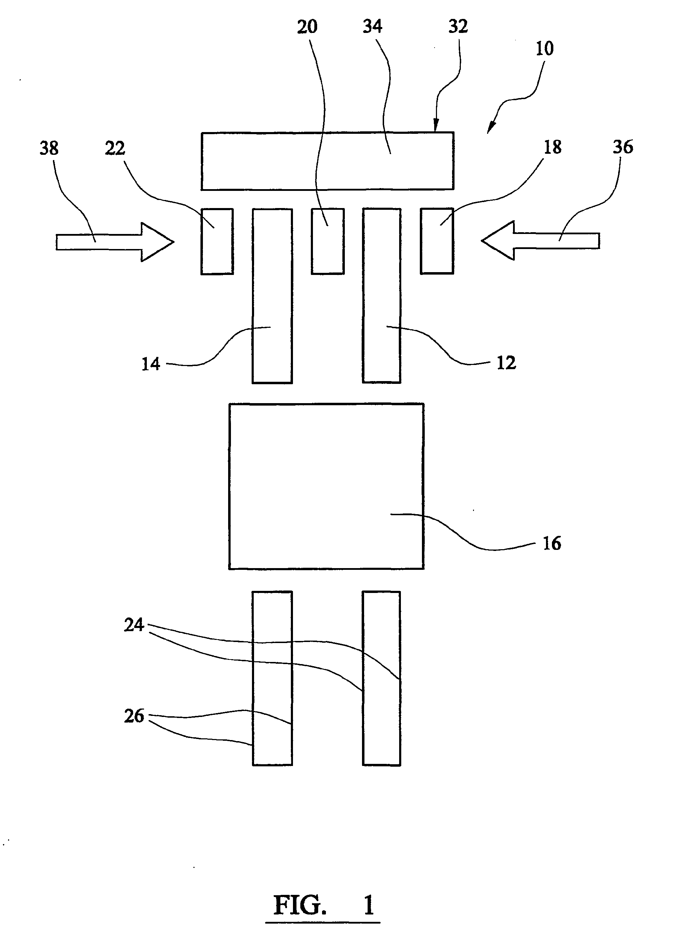

As shown in Fig 1 a spot-type automotive disc brake 10 comprises a pair of rotatable brake discs 12, 14, a rotatable mounting 16 for the brake discs to permit rotation of the discs and which is adapted to drive the brake discs and have exerted thereon the braking effect by the discs when the disc brake 10 is actuated.

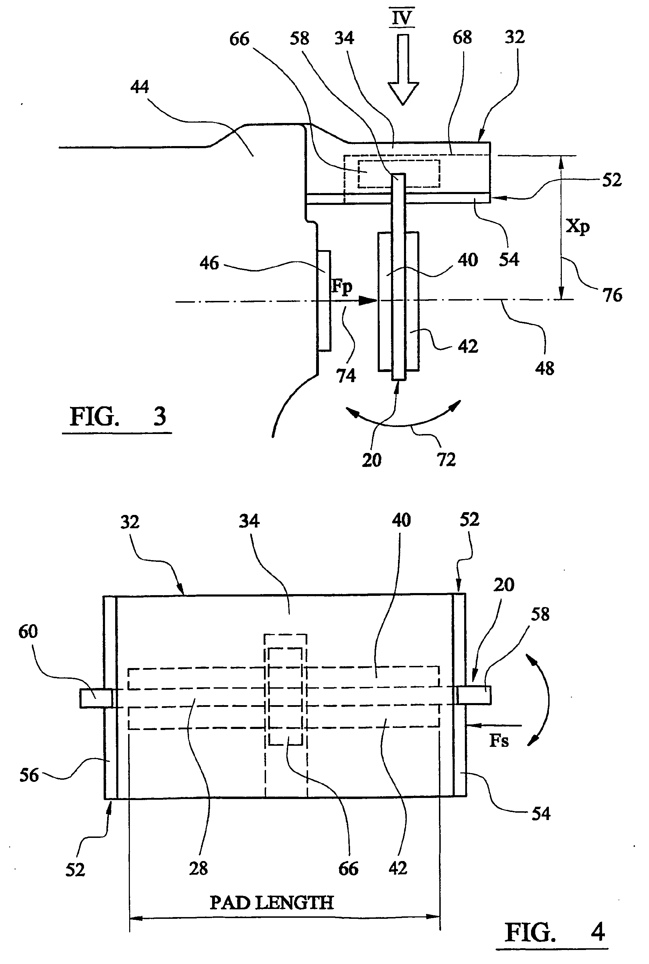

Two pairs of friction elements 18, 20 and 22 are provided and are adapted to frictionally engage braking surfaces 24, 26 provided at opposite sides of brake discs 12, 14 to effect braking on actuating actuation means for the brake. Central friction element 20 is double-sided for frictional engagement with the mutually-inwardly facing braking surfaces 24, 26 of brake discs 12, 14 and is provided with appropriately facing friction pad material accordingly. Friction elements 18, 20, 22 comprise (as shown in Figs 3 and 4) in each case a generally flat metal backing plate 28 and secured thereto and standing proud thereof a body of friction material of known construction for high durability frictional engagement with the relevant braking surface of the relevant brake disc. In the case of central friction element 20, the friction material is provided at both faces of the backing plate 28.

Brake discs 12, 14 are axially slidable in use with respect to their rotatable mounting 16 under the action of friction elements 18, 20, 22 and the actuation means (to be described below) therefor during braking. For example the brake discs may be keyed to the rotatable mounting or hub 16 at three or more locations and resilient means may act there between.

A non-rotatable mounting 32 for friction elements 18, 20,22 is provided comprising a caliper or bridge structure 34 which is mounted on a fixed structure of the vehicle to be braked, for example on the wheel mounting and which straddles the brake discs 12, 14 and also provides a mounting for actuation means 36,38 (indicated diagrammatically) which applies inwardly directed braking forces to the outer friction elements 18, 22, thereby causing frictional engagement with the brake discs 12, 14 and slight sliding movement of those discs with respect to their rotatable mounting 16. In Fig 1 of course it can be seen that the clearances between the structures have been greatly exaggerated for simplicity of diagrammatic illustration. The actuation means 36, 38 could comprise a pair of piston and cylinder assemblies. However only one such is strictly needed since the actuation means can be one-sided with a fixed structure at one side or the other of the assembly of discs and friction elements (which fixed structure could simply be a stop extending from caliper 34), and against which fixed structure the assembly is pushed by the single actuation means. Further details in this regard may be found in our co-pending applications WO 98/26192 (docket 2558).

Non-rotatable mounting 32 for the friction elements 18 to 22 is adapted to permit sliding movement of the friction elements into and out of frictional engagement with the brake discs while resisting movement of the friction elements under the action of frictional forces generated by engagement of the friction elements with the discs 12, 14.

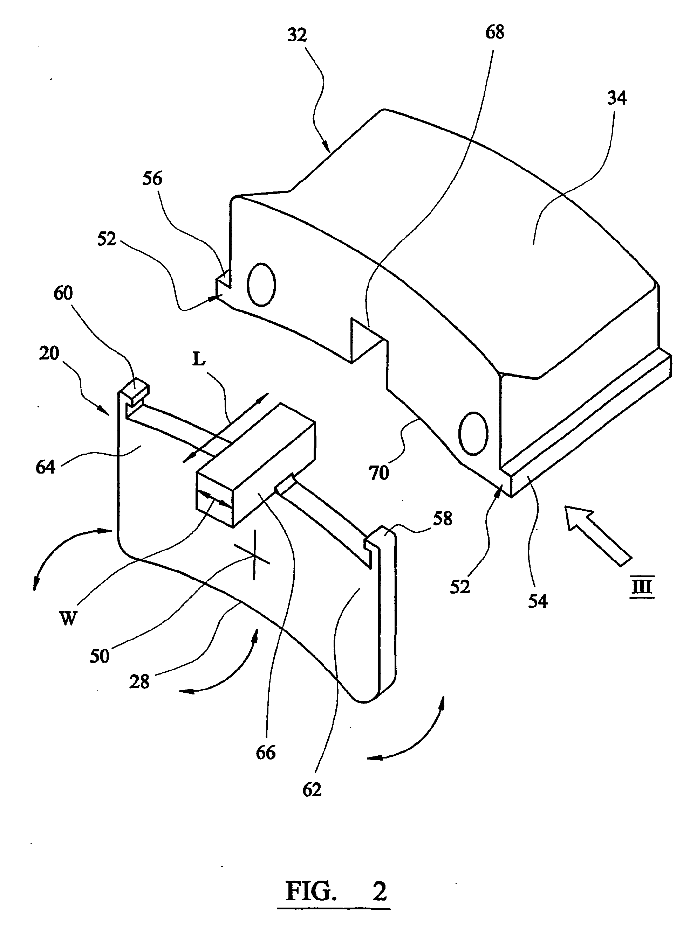

Turning now to the details of the structures shown in Figs 2, 3 and 4, we mention first that the friction element illustrated is taken to be the central friction element 20 which (though not shown in Fig 2) is provided as shown in Figs 3 and 4 with pads 40, 42 of friction material facing axially at its opposite sides.

Other structures seen in the drawings include the casting 44 to which caliper 34 is secured and from which the actuating piston 46 can extend under the action of the usual hydraulic and driver-controlled brake actuation system having a line of action 48 which of course intersects the friction elements, this location being shown in Fig 2 at 50 which identifies the line of action of the centre of piston 46.

As also shown in Figs 2 to 4 axially-extending primary abutment or torque-transmitting means 52 is provided in relation to caliper 34 and is adapted to act on the slidable friction elements 20, 22 (end friction element 18 being secured or fixed to an end plate (not shown) extending downwards from the outboard end of caliper 34).

Primary guide means 52 comprises axially-extending guide rails 54, 56, one at each side of caliper 34 and adapted to receive corresponding hook elements 58, 60 provided at spaced locations namely the opposite circumferentially-spaced ends 62, 64 of friction element 20. Thus, guide rails 54, 56 and hook elements 58, 60 serve to ensure that friction element 20 (and likewise sliding friction element 22 in a similar way) is able to hang from the caliper for sliding axial movement lengthwise thereof towards and away from the brake discs 12, 14.

In addition to the guide rails 54, 56 and hook elements 58, 60 there is provided further abutment or torque-transmitting means comprising an abutment or torque-transmitting element 66 located intermediate spaced locations namely the opposite ends 62, 64 of the friction element and adapted to enable the friction element to resist torque from frictional forces applied to it during use of the brake, while permitting the friction element to move towards and away from the brake discs.

Abutment or torque-transmitting element 66 is received in an abutment or torque-transmitting channel 68 formed in the underside 70 of caliper 34.

It will be noted from Fig 2 that abutment or torqur-transmitting element 66 is generally radially in-line with the line of action 48 of actuating piston 46 and indeed is directly above the piston centre line point 50.

Fig 2 of the drawings shows the proportions of abutment or torque-transmitting element 66 in a clear manner with respect to the remainder of the friction element structure. Thus, the abutment or torque-transmitting element has an axial length L and a traverse width W such that L/W lies in the range of 2 to 3. In general, the ratio L/W should preferably be at least 1 and more preferably still in the range of 1 to 3. Such a ratio has the effect of maximising the abutment or torque-transmitting influence of the abutment or torque-transmitting element in relation to frictionally-developed torque forces applied to the friction element during use, thereby minimising the tendency for taper wear to develop in the pads 40, 42 of friction material.

The significance of the aspect ratio L/W in terms of maximising the torgue-transmitting effect of the abutment or torque-transmitting element is discussed above. So far as the length aspects of the dimensions of the abutment element 66 are concerned, the following applies. As shown in Fig 3, there is shown at 72 an indication of the possibility of friction element tilt in an axial plane which can occur when the brake is in its off condition. Such tilting is limited by engagement of abutment element 66 with the top of groove 68. The possibility of tilt in the mode indicated at 72 is decreased with increasing length of the abutment element 66. Likewise, a similar tilt-inhibiting effect is exerted by minimising clearance between the top of the abutment element 66 and the top of groove 68.

In the on condition of the brake, as indicated in Fig 3, the brake-applying force Fp is indicated at 74 and acts along line 48 on the friction element 20 and has a turning (or taper wear) moment Fp x xp at the element 66 where xp is the radial distance (identified at 76) of off-set of line 48 from the top of channel 68. This force is resisted by a force at the end of the abutment element 66 acting on the top of groove 68 accordingly. This function likewise is enhanced by increasing the length of abutment or torque-transmitting element 66.

In use, disc brake 10 operates in substantially the usual manner, which is implicit from the above description, so far as concerns the general mode of frictional engagement of the relevant surfaces.

So far as guidance of the friction elements during use is concerned, the friction elements are supported on guide rails 54, 56 through hook elements 58, 60 and frictionally-developed torque forces applied to the pads 40, 42 of friction material which tend to produce twisting forces arising from the rotation of the brake discs are largely taken out of the friction element structure by the abutment or torque-transmitting element 66 and the engagement of same with the side walls of abutment or torque-transmitting channel 68 in which the abutment or torque-transmitting element is a close sliding fit. Indeed, in principle, the tolerances in relation to the sliding fit of abutment or torque-transmitting element 66 within abutment or torque-transmitting channel 68 are tighter (meaning a closer fit) than exists between hook elements 58, 60 and guide rails 54, 56. As a result, wear on the pads 40, 42 or friction material is greatly improved in terms of its uniformity throughout the total working area of the friction material.

Amongst other modifications which could be made in the above embodiment while remaining within the scope of the appended claims are changes to the shape and dimensions and exact location of the abutment or torque-transmitting element 66 in relation to caliper 34.

## Claims

1. A spot-type automotive disc brake (10) comprising:
a) at least one rotatable brake disc (12,14);
b) a rotatable mounting (16) for said brake disc (12,14) to permit such rotation and which is adapted to drive said brake disc (12,14) and to have exerted thereon a braking effect by said brake disc (12,14) when the disc brake (10) is actuated;
c) at least one pair of friction elements (18,20,22) adapted to frictionally engage braking surfaces (24,26) on opposite sides of said brake disc (12,14) to effect braking on actuation of actuation means (36,38) therefor;
d) a non-rotatable axially fixed mounting (32) for the friction elements (18,20,22) adapted to permit axial sliding movement of the at least one friction element (18,20,22) into and out of frictional engagement with said disc (12,14) while locating same and resisting movement of same under the action of friction forces generated by engagement of same with said at least one disc (12,14); and
e) axially-extending support and guide means (52) being provided in relation to said non-rotatable mounting (32) and adapted to act on said at least one friction element (18,20,22) at two spaced locations (62,64) thereof, to in use support and guide the at least one friction element (18,20,22) from the non-rotatable axially fixed mounting (32) such that the at least one friction element (18,20,22) is able in use to execute supported axial movement for frictional engagement with the brake disc (12,14);
**characterised in that** the at least one friction element (18,20,22) comprises a torque transmitting abutment element (66) on an upper edge of and integral with the friction element (18,20,22), and having a length dimension (L) extending lengthwise in the direction of sliding brake-actuating motion of said friction element (18,20,22) beyond the thickness of a backing plate (28) of the at least one friction element (18,20,22); and
the non-rotatable mounting (32) includes a complementary channel (68) formed in the non-rotatable mounting (32) to slidingly receive the torque transmitting abutment element (66) of the at least one friction element (18,20,22) to thereby resist torque applied to said friction element (18,20,22) and tilting of the friction element (18,20,22) during use of said brake (10) while permitting said friction element (18,20,22) to move towards and away from the disc (12,14).

2. A spot-type automotive disc brake (10) according to claim 1 in which the brake disc (12,14) is axially slidable in use with respect to said mounting (16) therefor under the action of said friction elements (18,20,22) and said actuation means (36,38) therefor.

3. A spot-type automotive disc brake (10) according to claim 3 comprising a pair of axially slidable discs (12,14).

4. A spot-type automotive disc brake (10) according to any preceding claim in which the torque transmitting abutment element (66) and complementary channel (68) of the non-rotatable mounting (68) are located generally radially in-line with a line of action (48) of said actuation means (36,38).

5. A spot-type automotive disc brake (10) according to any preceding claim in which the actuation means (36,38) comprises a piston (46) and the torque transmitting abutment element (66) and complementary channel (68) of the non-rotatable mounting (32) are located generally radially in-line with the piston (46).

6. A spot-type automotive disc brake (10) according any one of claims 1 to 4 in which the actuation means (36,38 comprises twin actuating pistons and the torque transmitting abutment element (66) and complementary channel (68) of the non-rotatable mounting are located generally radially in-line with a central position between the twin actuating pistons.

7. A spot-type automotive disc brake (10) according to any preceding claim in which the axially-extending support and guide means (52) comprises a pair of spaced apart axially extending guide rails (54,56), and the at least one friction element (18,20,22) comprises a pair of corresponding hook elements (58,60) which slidingly engage the guide rails (54,56).

8. A spot-type automotive disc brake (10) according to any preceding claim in which the torque transmitting abutment element (66) has a length-to-width ratio (L:W) in the range of 1:1 to 3:1.

9. A spot-type automotive disc brake (10) according to any preceding claim in which torque transmitting abutment element (66) and complementary channel (68) of the non-rotatable mounting (32) are located intermediate the two spaced locations of the axially-extending support and guide means (52).

10. A brake friction element (20) for use in a spot type automotive disc brake (10) according to any of claims 1 to 9 comprising at least one rotatable disc (12,14), the brake friction element comprising:
a backing plate (28);
support and guide means (58,60) to in use support and guide the friction element (20) from a fixed mounting (32) for said friction element (20) such that the friction element is able in use to execute supported axial movement for frictional engagement with the brake disc (12,14); and
a torque transmitting abutment element (66) on an upper edge of and integral with the friction element (20), and having a length dimension (L) extending lengthwise in the direction of the thickness of the backing plate (28) beyond the thickness of the backing plate (28), and adapted to resist torque applied to said friction element (20) and tilting of the friction element (20) during use of said brake (10) while permitting said friction element (20) to move towards and away from the disc (12,14).

11. A brake friction element (20) according to claim 10 in which the torque transmitting abutment element (66) has a length-to-width ratio (L:R) in the range of 1:1 to 3:1.

12. A brake friction element (20) according to claim 10 or 11 in which the torque transmitting abutment element (66) is located such that, in use, it is generally radially in line with a line of action (48) of an actuation means (36,38) of the brake (10).

13. A brake friction element (20) according to any one of claims 10 to 12 in which the support and guide means (58,60) comprises a pair of support and guide means at spaced locations on the friction element (20), and the torque transmitting abutment element (66) is located intermediate said spaced locations on the friction element (20).

14. A brake friction element (20) according to claim 13 in which the support and guide means (58,60) are located at opposite ends of the friction element.

15. A brake friction element (20) according to any one of claims 10 to 14 in which the support and guide means (58,60) of the friction element (20) comprise respective hook elements (58,60) which slidingly engage corresponding guide rails (54,56) on the fixed support (32).

16. A brake friction element (20) according to any one of claims 10 to 15 in which the torque transmitting abutment element (66) is adapted to, in use, be slidingly received within a complementary channel (68) defined in the fixed mounting (32) for the friction element (20).

17. A spot-type automotive disc brake (10) including a brake friction element (20) of any one of claims 10 to 16.

## Patentansprüche

1. Punktscheibenbremse (10) für Kraftfahrzeuge, umfassend:
a) wenigstens eine drehbare Bremsscheibe (12, 14);
b) eine drehbare Halterung (16) für die Bremsscheibe (12, 14), um Drehung zu ermöglichen, und die angepasst ist, um die Bremsscheibe (12, 14) anzutreiben und um eine Bremswirkung darauf durch die Bremsscheibe (12, 14) auszuwirken, wenn die Scheibenbremse (10) betätigt wird;
c) wenigstens ein Paar Reibelemente (18, 20, 22), die angepasst sind, um reibungsschlüssig in Bremsoberflächen (24, 26) auf gegenüberliegenden Seiten der Bremsscheibe (12, 14) einzugreifen, um bei Betätigung einer Betätigungsvorrichtung (36, 38) dafür Bremsen zu bewirken;
d) eine nicht drehbare, axial befestigte Halterung (32) für die Reibelemente (18, 20, 22), angepasst um axiale Gleitbewegung des wenigstens einen Reibelements (18, 20, 22) in und aus reibungsschlüssigem Eingriff mit der Scheibe (12, 14) zu ermöglichen, während dieselbe positioniert wird und der Bewegung derselben unter der Wirkung der durch Eingriff der gleichen mit der wenigstens einen Scheibe (12, 14) erzeugten Reibungskräfte entgegenwirkt; und
e) sich in axialer Richtung erstreckende Stütz- und Führungsvorrichtung (52), die in Bezug auf die nicht drehbare Halterung (32) bereitgestellt wird und angepasst ist, um auf das wenigstens eine Reibelement (18, 20, 22) an zwei beabstandeten Positionen (62, 64) desselben zu wirken, um in Gebrauch das wenigstens eine Reibelement (18, 20, 22) von der nicht drehbaren, in axialer Richtung befestigten Halterung (32) zu stützen und zu führen, so dass das wenigstens eine Reibelement (18, 20, 22) in der Lage ist, in Gebrauch unterstützte axiale Bewegung für reibungsschlüssigen Eingriff mit der Bremsscheibe (12, 14) auszuführen; **dadurch gekennzeichnet, dass** das wenigstens eine Reibelement (18, 20, 22) ein Drehmoment übertragendes Anschlagelement (66) an einem oberen Rand des und aus einem Stück mit dem Reibelement (18, 20, 22) umfasst und ein Längenmaß (L) aufweist, das sich in der Längsrichtung der gleitenden bremsbetätigenden Bewegung des Reibelements (18, 20, 22) über die Dicke einer Grundplatte (28) des wenigstens einen Reibelements (18, 20, 22) hinaus erstreckt; und die nicht drehbare Halterung (32) einen zusätzlichen Kanal (68) umfasst, der in der nicht drehbaren Halterung (32) ausgebildet wird, um gleitend das Drehmoment übertragende Anschlagelement (66) des wenigstens einen Reibelements (18, 20, 22) aufzunehmen, um **dadurch** Drehmoment entgegenzuwirken, das auf das Reibelement (18, 20, 22) aufgebracht wird, sowie Kippen des Reibelements (18, 20, 22) während des Gebrauchs der Bremse (10), und um gleichzeitig zu ermöglichen, dass sich das Reibelement (18, 20, 22) zu der Scheibe (12, 14) hin und von dieser weg bewegt.

2. Punktscheibenbremse (10) für Kraftfahrzeuge nach Anspruch 1, wobei die Bremsscheibe (12, 14) in Gebrauch in Bezug auf die Halterung (16) für dieselbe unter der Einwirkung der Reibelemente (18, 20, 22) und der Betätigungsvorrichtungen (36, 38) für dieselbe axial verschiebbar ist.

3. Punktscheibenbremse (10) für Kraftfahrzeuge nach Anspruch 3, die ein Paar axial verschiebbarer Scheiben (12, 14) umfasst.

4. Punktscheibenbremse (10) für Kraftfahrzeuge nach einem der vorangehenden Ansprüche, bei der das Drehmoment übertragende Anschlagelement (66) und der zusätzliche Kanal (68) der nicht drehbaren Halterung (68) im Allgemeinen in radialer Richtung in einer Reihe mit der Wirkungslinie (48) der Betätigungsvorrichtungen (36, 38) angeordnet sind.

5. Punktscheibenbremse (10) nach einem der vorhergehenden Ansprüche, bei der die Betätigungsvorrichtungen (36, 38) einen Kolben (46) umfassen und das Drehmoment übertragende Anschlagelement (66) sowie der zusätzliche Kanal (68) der nicht drehbaren Halterung (32) im Allgemeinen in radialer Richtung in einer Reihe mit dem Kolben (46) angeordnet sind.

6. Punktscheibenbremse (10) für Kraftfahrzeuge nach einem der Ansprüche 1 bis 4, wobei die Betätigungsvorrichtungen (36, 38) Doppelbetätigungskolben umfassen und das Drehmoment übertragende Anschlagelement (66) sowie der zusätzliche Kanal (68) der nicht drehbaren Halterung im Allgemeinen in radialer Richtung in einer Reihe mit einem zentralen Abschnitt zwischen den Doppelbetätigungskolben angeordnet sind.

7. Punktscheibenbremse (10) nach einem der vorhergehenden Ansprüche, wobei die sich in axialer Richtung erstreckende Trag- und Führungsvorrichtung (52) ein Paar von beabstandeten, sich in axialer Richtung erstreckenden Führungsschienen (54, 56) umfasst und das wenigstens eine Reibelement (18, 20, 22) ein Paar entsprechender Hakenelemente (58, 60) umfasst, die gleitend in die Führungsschienen (54, 56) eingreifen.

8. Punktscheibenbremse (10) nach einem der vorangehenden Ansprüche, wobei das Drehmoment übertragende Anschlagelement (66) ein Verhältnis Länge zu Breite (L:W) in dem Bereich von 1:1 bis 3:1 aufweist.

9. Punktscheibenbremse (10) für Kraftfahrzeuge nach einem der vorhergehenden Ansprüche, wobei das Drehmoment übertragende Anschlagelement (66) und der zusätzliche Kanal (68) der nicht drehbaren Halterung (32) zwischen den beiden beabstandeten Positionen der sich axial erstreckenden Trag- und Führungsvorrichtung (52) angeordnet sind.

10. Brems-Reibelement (20) zum Einsatz in einer Punktscheibenbremse (10) für Kraftfahrzeuge nach einem der Ansprüche 1 bis 9, das wenigstens eine drehbare Scheibe (12, 14) umfasst, wobei das Brems-Reibungselement umfasst:
eine Grundplatte (28);
Trag- und Führungsvorrichtungen (58, 60) zum Einsatz beim Tragen und Führen des Reibelements (20) von einer festen Halterung (32) für das Reibelement (20), so dass das Reibelement in der Lage ist, unterstützte axiale Bewegung für reibungsschlüssigen Eingriff mit der Bremsscheibe (12, 14) auszuführen; und
ein Drehmoment übertragendes Anschlagelement (66) an einem oberen Rand des und aus einem Stück mit dem Reibelement (20), das ein Längsmaß (L) in der Längsrichtung der Dicke der Grundplatte (28) über die Dicke der Grundplatte (28) hinaus aufweist und angepasst ist, um auf das Reibelement (20) aufgebrachtem Drehmoment und Kippen des Reibelements (20) während des Gebrauchs der Bremse (10) entgegenzuwirken und um gleichzeitig zu ermöglichen, dass sich das Reibelement (20) zu der Scheibe (12, 14) hin und von dieser weg bewegt.

11. Brems-Reibelement (20) nach Anspruch 10, wobei das Drehmoment übertragende Anschlagelement (66) ein Verhältnis Länge zu Breite (L:R) in dem Bereich von 1:1 bis 3:1 aufweist.

12. Brems-Reibelement (20) nach Anspruch 10 oder 11, wobei das Drehmoment übertragende Anschlagelement (66) so angeordnet ist, dass es in Gebrauch im Allgemeinen radial in einer Reihe mit der Wirkungslinie (48) der Betätigungsvorrichtung (36, 38) der Bremse (10) ausgerichtet ist.

13. Brems-Reibelement (20) nach einem der Ansprüche 10 bis 12, wobei die Trag- und Führungsvorrichtungen (58, 60) ein Paar von Trag- und Führungsvorrichtungen an beabstandeten Positionen an dem Reibelement (20) umfassen und wobei das Drehmoment übertragende Anschlagelement (66) zwischen den beabstandeten Positionen an dem Reibelement (20) angeordnet ist.

14. Brems-Reibelement (20) nach Anspruch 13, wobei die Trag- und Führungsvorrichtungen (58, 60) an gegenüberliegenden Enden des Reibelements angeordnet sind.

15. Brems-Reibelement (20) nach einem der Ansprüche 10 bis 14, wobei die Trag- und Führungsvorrichtungen (58, 60) des Reibelementes (20) jeweilige Hakenelemente (58, 60) umfassen, die gleitend in jeweilige Führungsschienen (54, 56) auf dem festen Träger (32) eingreifen.

16. Brems-Reibelement (20) nach einem der Ansprüche 10 bis 15, wobei das Drehmoment übertragende Anschlagelement (66) angepasst ist, um in Gebrauch gleitend in einem zusätzlichen Kanal (68) aufgenommen zu werden, welcher in der festen Halterung (32) für das Reibelement (20) ausgebildet wird.

17. Punktscheibenbremse (10) mit einem Brems-Reibelement (20) aus einem der Ansprüche 10 bis 16.

## Revendications

1. Frein à disque du type à points pour automobile (10), comprenant :
(a) au moins un disque de frein rotatif (12, 14) ;
(b) une monture rotative (16) pour le dit disque de frein (12, 14) qui permet une telle rotation et qui est prévue pour entraîner le dit disque de frein (12, 14), et sur laquelle s'exerce un effet de freinage par le dit disque de frein (12, 14) lorsque le frein à disque (10) est actionné ;
(c) au moins une paire d'éléments de friction (18, 20, 22) prévus pour venir en contact de friction avec des surfaces de freinage (24, 26) sur des côtés opposés du dit disque de frein (12, 14) afin d'effectuer un freinage par activation de moyens de commande (36, 38) des dits éléments de friction ;
(d) une monture non tournante et axialement fixe (32) pour les éléments de friction (18, 20, 22) prévue pour permettre un mouvement coulissant axial du dit au moins un élément de friction (18, 20, 22) en contact et hors de contact de friction avec le dit disque (12, 14) tout en positionnant le dit élément de friction et en s'opposant à son mouvement sous l'action des forces de friction engendrées par son contact avec le dit au moins un disque (12, 14) ; et
(e) des moyens de support et de guidage s'étendant axialement (52), prévus en relation avec la dite monture non tournante (32) et pouvant agir sur le dit au moins un élément de friction (18, 20, 22) à deux endroits espacés (62, 64) de celui-ci, afin de supporter et de guider en utilisation le dit au moins un élément de friction (18, 20, 22) à partir de la monture axialement fixe et non tournante (32) de sorte que le dit au moins un élément de friction (18, 20, 22) peut exécuter en utilisation un mouvement axial supporté pour contact de friction avec le disque de frein (12, 14) ;
**caractérisé en ce que** le dit au moins un élément de friction (18, 20, 22) comprend un élément de butée de transmission de couple (66) placé sur un bord supérieur de l'élément de friction (18, 20, 22) et solidaire de ce dernier, et ayant une dimension de longueur (L) s'étendant longitudinalement dans la direction de mouvement glissant d'activation de frein du dit élément de friction (18, 20, 22) au-delà de l'épaisseur d'une plaque d'appui (28) du dit au moins un élément de friction (18, 20, 22) ; et
la monture non tournante (32) comprend un canal complémentaire (68) formé dans la monture non tournante (32) de manière à recevoir de façon coulissante l'élément de butée de transmission de couple (66) du dit au moins un élément de friction (18, 20, 22) afin de résister au couple appliqué au dit élément de friction (18, 20, 22) et au basculement de l'élément de friction (18, 20, 22) pendant l'utilisation du dit frein (10) tout en permettant au dit élément de friction (18, 20, 22) de se rapprocher et de s'éloigner du disque (12, 14).

2. Frein à disque du type à points pour automobile (10) selon la revendication 1, dans lequel le disque de frein (12, 14) peut axialement coulisser en utilisation par rapport à sa dite monture (16) sous l'action des dits éléments de friction (18, 20, 22) et de leurs dits moyens de commande (36, 38).

3. Frein à disque du type à points pour automobile (10) selon la revendication 2, comprenant deux disques axialement coulissants (12, 14).

4. Frein à disque du type à points pour automobile (10) selon une quelconque des revendications précédentes, dans lequel l'élément de butée de transmission de couple (66) et le canal complémentaire (68) de la monture non tournante (68) sont placés sensiblement radialement en ligne avec une ligne d'action (48) des dits moyens de commande (36, 38).

5. Frein à disque du type à points pour automobile (10) selon une quelconque des revendications précédentes, dans lequel les moyens de commande (36, 38) comprennent un piston (46), et l'élément de butée de transmission de couple (66) et le canal complémentaire (68) de la monture non tournante (32) sont situés sensiblement radialement en ligne avec le piston (46).

6. Frein à disque du type à points pour automobile (10) selon une quelconque des revendications1 à 4, dans lequel les moyens de commande (36, 38) comprennent des pistons de commande jumeaux, et l'élément de butée de transmission de couple (66) et le canal complémentaire (68) de la monture non tournante sont situés sensiblement radialement en ligne avec une position centrale entre les pistons de commande jumeaux.

7. Frein à disque du type à points pour automobile (10) selon une quelconque des revendications précédentes, dans lequel les moyens de support et de guidage s'étendant axialement (52) comprennent une paire de rails de guidage mutuellement espacés et s'étendant axialement (54, 56), et le dit au moins un élément de friction (18, 20, 22) comprend une paire d'éléments de crochet correspondants (58, 60) qui sont en prise de façon coulissante avec les rails de guidage (54, 56)

8. Frein à disque du type à points pour automobile (10) selon une quelconque des revendications précédentes, dans lequel l'élément de butée de transmission de couple (66) a un rapport de la longueur à la largeur (L:W) dans la plage de 1:1 à 3:1.

9. Frein à disque du type à points pour automobile (10) selon une quelconque des revendications précédentes, dans lequel l'élément de butée de transmission de couple (66) et le canal complémentaire (68) de la monture non tournante (32) sont placés entre les deux positions espacées des moyens de support et de guidage s'étendant axialement (52).

10. Elément de friction de frein (20) utilisable dans un frein à disque par points pour automobile (10) selon une quelconque des revendications 1 à 9, comprenant au moins un disque rotatif (12, 14), l'élément de friction de frein comprenant :
une plaque d'appui (28) ;
des moyens de support et de guidage (58, 60) pour supporter et guider en utilisation l'élément de friction (20) à partir d'une monture fixe (32) pour le dit élément de friction (20), de sorte que l'élément de friction puisse effectuer en utilisation un mouvement axial supporté pour venir en contact de friction avec le disque de frein (12, 14) ; et
un élément de butée de transmission de couple (66) placé sur un bord supérieur et solidaire de l'élément de friction (20), et ayant une dimension de longueur (L) qui s'étend longitudinalement dans la direction de l'épaisseur de la plaque d'appui (28) au-delà de l'épaisseur de la plaque d'appui (28), et prévu pour résister au couple appliqué au dit élément de friction (20) et au basculement de l'élément de friction (20) pendant l'utilisation du dit frein (10) tout en permettant au dit élément de friction (20) de se rapprocher et s'éloigner du disque (12, 14).

11. Elément de friction de frein (20) selon la revendication 10, dans lequel l'élément de butée de transmission de couple (66) a un rapport de la longueur à la largeur (L : R) dans la plage de 1:1 à 3:1.

12. Elément de friction de frein (20) selon la revendication 10 ou 11, dans lequel l'élément de butée de transmission de couple (66) est placé de sorte que, en utilisation, il soit sensiblement radialement en ligne avec une ligne d'action (48) d'un moyen de commande (36, 38) du frein (10).

13. Elément de friction de frein (20) selon une quelconque des revendications 10 à 12, dans lequel les moyens de support et de guidage (58, 60) comprennent une paire de moyens de support et de guidage à des positions espacées sur l'élément de friction (20), et l'élément de butée de transmission de couple (66) est situé entre les dites positions espacées sur l'élément de friction (20).

14. Elément de friction de frein (20) selon la revendication 13, dans lequel les moyens de support et de guidage (58, 60) sont placés aux extrémités opposées de l'élément de friction.

15. Elément de friction de frein (20) selon une quelconque des revendications 10 à 14, dans lequel les moyens de support et de guidage (58, 60) de l'élément de friction (20) comprennent des éléments de crochet respectifs (58, 60) qui viennent en prise de façon coulissante avec des rails de guidage correspondants (54, 56) sur le support fixe (32).

16. Elément de friction de frein (20) selon une quelconque des revendications 10 à 15, dans lequel l'élément de butée de transmission de couple (66) est prévu pour être reçu de façon coulissante, en utilisation, dans un canal complémentaire (68) défini dans la monture fixe (32) pour l'élément de friction (20).

17. Frein à disque du type à points pour automobile (10) comprenant un élément de friction de frein (20) selon une quelconque des revendications 10 à 16.
